# EUROPÄISCHE PATENTSCHRIFT

(11) **EP 4 335 627 B1**
(45) Veröffentlichungstag und Bekanntmachung des Hinweises auf die Patenterteilung: **24.12.2025**
(21) Anmeldenummer: 23189701.8
(22) Anmeldetag: 04.08.2023
(51) Int. Cl.: B29C 65/18, B29C 65/30, B65B 7/16, B65B 51/14, B65B 59/04

(54) **SIEGELSTATION ZUM SIEGELN VON VERPACKUNGEN**
SEALING STATION FOR SEALING PACKAGES
POSTE DE SCELLAGE POUR SCELLER DES EMBALLAGES

(30) Priorität: 17.08.2022 DE 102022120764
(43) Veröffentlichungstag der Anmeldung: 13.03.2024
(73) Patentinhaber: MULTIVAC Sepp Haggenmüller SE & Co. KG, 87787 Wolfertschwenden (DE)
(72) Erfinder: WEILAND, Markus, 87730 Bad Grönenbach (DE); ZETTLER, Christoph, 88459 Tannheim (DE); PATZ, Dominik, 87435 Kempten (DE); WÖLFLE, Manuel, 87493 Lauben (DE)
(74) Vertreter: Grünecker Patent- und Rechtsanwälte PartG mbB

(56) Entgegenhaltungen:
- EP-A2- 1 228 853
- WO-A1-2018/220574
- WO-A1-2019/229622
- IT-A1- MI20 090 163

## Beschreibung

Die vorliegende Erfindung betrifft eine Siegelstation zum Siegeln von Verpackungen gemäß Anspruch 1.

### Stand der Technik

Aus dem Stand der Technik sind Siegelstationen zum Siegeln von Verpackungen grundsätzlich bekannt. Die Siegelstationen umfassen üblicherweise ein Oberwerkzeug und ein Unterwerkzeug, die relativ zueinander bewegbar angeordnet sind. In dem Unterwerkzeug können Aufnahmen oder Mulden vorgesehen sein, um eine tiefgezogene Verpackung aufzunehmen. Weiterhin kann zwischen dem Oberwerkzeug und dem Unterwerkzeug eine Folie eingebracht werden, mit der ein Verschließen der eingebrachten Verpackungen realisiert werden kann.

Dazu umfasst das Oberwerkzeug eine Siegelplatte, die in ihrer Form und Kontur so ausgestaltet ist, dass sie einen Wärmeübertrag an den zu siegelnden Teil der Verpackung bzw. Folie bewirken kann.

Während bekannte Siegelstationen zuverlässig einen kontinuierlichen Betrieb gewährleisten können, kann aufgrund von Veränderungen in den Anforderungen an die Verpackungen (bspw. Deren Form) ein Umbau der Siegelstation erforderlich sein. Dabei kann die Siegelplatte entfernt und durch eine andere Siegelplatte ersetzt werden, um den sich verändernden Anforderungen an die zu siegelnden Verpackungen Rechnung zu tragen.

So ist beispielsweise aus der EP 1 228 853 A2 eine Siegelstation mit einer austauschbaren Verbindungsplatte für Heizelemente zum Formen verschiedener Behältnisse bekannt.

Aus der IT MI 20090163 ist weiterhin eine Siegelstation mit herausnehmbaren Folienpressplatten bekannt.

Die WO 2019/229622 A1 zeigt weiterhin eine Siegelmaschine mit oberen und unteren herausnehmbaren Formen mit geeigneten elektrischen Kontakten.

Aus der WO 2018/220574 A1 ist eine zweiteilige Siegelplatte mit einem festen und einem austauschbaren Bestandteil bekannt.

Dieses Umrüsten der Siegelstation erfordert jedoch einen Stillstand der Siegelstation und umfangreiche mechanische Umrüstarbeiten, die zu langen Stillstandszeiten führen können.

### Aufgabe

Ausgehend vom bekannten Stand der Technik besteht die zu lösende technische Aufgabe darin, eine Siegelstation sowie Siegelplatten anzugeben, die ein möglichst einfaches Umrüsten einer Siegelstation zur Verwendung einer anderen Siegelplatte erlauben und gleichzeitig ein Umrüsten in kurzer Zeit ermöglichen.

### Lösung

Diese Aufgabe wird erfindungsgemäß durch die Siegelstation nach Anspruch 1 gelöst. Vorteilhafte Weiterbildungen der Erfindung sind in den Unteransprüchen erfasst.

Die erfindungsgemäße Siegelstation zum Siegeln von Verpackungen umfasst ein Oberwerkzeug und ein Unterwerkzeug mit wenigstens einer Aufnahme für eine Verpackung, wobei zum Siegeln eine Folie zwischen dem Oberwerkzeug und dem Unterwerkzeug entlang einer Laufrichtung der Folie geführt werden kann und das Oberwerkzeug und das Unterwerkzeug relativ zueinander bewegbar sind, um ein Siegeln einer Verpackung mit der Folie zu bewirken, wobei das Oberwerkzeug eine Aufnahme zum Aufnehmen einer Siegelplatte aufweist, wobei die Aufnahme so ausgebildet ist, dass eine Siegelplatte in oder entgegen der Laufrichtung aus der Aufnahme entnommen werden kann.

Die Laufrichtung der Folie entspricht dabei der Bewegungsrichtung der Folie und/oder der Bewegungsrichtung der Verpackungen zumindest zwischen dem Oberwerkzeug und dem Unterwerkzeug. Dass die Siegelplatte in oder entgegen der Laufrichtung aus der Aufnahme entnommen werden kann, ist hier so zu verstehen, dass zumindest eine Bewegungskomponente der Siegelplatte bei dem Entnehmen der Siegelplatte aus der Aufnahme parallel zur Laufrichtung der Folie ist und dementsprechend in Richtung stromab- oder stromaufwärts der Bewegungsrichtung der Folie verläuft.

Mit dieser Siegelstation kann eine Siegelplatte ohne negative Beeinflussung der Folie und insbesondere eines kontinuierlichen Folienbandes, das sich stromauf der Siegelstation erstreckt und dieser zugeführt wird, erfolgen. Gleichzeitig ist eine Beeinflussung des Betriebs oder eine separate Verstellung der Position des Oberwerkzeugs und des Unterwerkzeugs nicht notwendig, sodass auch das Umrüsten der Siegelstation für den Bediener einfacher durchgeführt werden kann. In einer Ausführungsform ist vorgesehen, dass die Aufnahme wenigstens zwei parallel zur Laufrichtung angeordnete Führungen umfasst, wobei eine Siegelplatte entlang den Führungen in die Aufnahme eingeführt und aus der Aufnahme entnommen werden kann. Die Führungen erleichtern das Herausnehmen und Einsetzen der Siegelplatte und vermeiden Beschädigungen.

Weiterhin kann vorgesehen sein, dass die Aufnahme lösbare Befestigungsmittel zum Befestigen der Siegelplatte in der Aufnahme umfasst. Als lösbares Befestigungsmittel kommen hier beispielsweise Schrauben oder Klickverbindungen infrage. Diese können besonders einfach gelöst und befestigt werden, so dass ein Austausch der Siegelplatte und ausreichende Befestigung in der Siegelstation ermöglicht wird.

In einer Ausführungsform umfasst das Oberwerkzeug ein Heizelement zum Übertragen von Wärme durch eine Siegelplatte auf die Folie zum Siegeln der Verpackung. Ein Austausch der Siegelplatte erfordert somit nur den Austausch der für die Form des Siegelns relevanten Teile der Siegelstation, was die Ausführung der Siegelplatte mit möglichst geringem Gewicht ermöglicht, wobei dennoch ein zuverlässiges Erwärmen der Folie gewährleistet wird.

In einer Weiterbildung dieser Ausführungsform ist vorgesehen, dass die Aufnahme ein Druckelement umfasst, das ausgebildet ist, eine in der Aufnahme angeordnete Siegelplatte gegen das Heizelement zu drücken. Hierdurch wird eine zuverlässige Wärmeübertragung an die Siegelplatte und damit auch an die Folie gewährleistet.

In einer Ausführungsform umfasst die Aufnahme einen beweglich angeordneten Rahmen, in den eine Siegelplatte eingelegt werden kann, wobei der Rahmen in oder entgegen der Laufrichtung bewegbar angeordnet ist, um eine Siegelplatte zu entnehmen.

Hiermit wird das Zuführen und Entfernen einer Siegelplatte weiter vereinfacht. Der Rahmen in dieser Ausführungsform kann auch als Rahmen entsprechend der vorangegangenen Ausführungsformen ausgeführt sein.

Insbesondere kann vorgesehen sein, dass der Rahmen ein Identifikationselement umfasst, das ein Einführen einer Siegelplatte nur in einer vorgegebenen Ausrichtung ermöglicht. Diese Ausführungsform gewährleistet korrektes Positionieren der Siegelplatte.

Ferner kann das Oberwerkzeug feststehend und das Unterwerkzeug bewegbar angeordnet sein, um ein Siegeln einer Verpackung mit der Folie zu ermöglichen. Hierdurch wird ein Bewegen des Oberwerkzeugs zum Wechseln der Siegelplatte vermieden, was die Handhabung für einen Bediener vereinfacht.

In einer weiteren Ausführungsform wird ein Bewegen einer Siegelplatte zum Entnehmen der Siegelplatte aus der Aufnahme durch ein Antriebselement bewirkt. Bei dem Antriebselement kann es sich insbesondere um einen Elektromotor handeln. Diese Ausführungsform vereinfacht den Austausch der Siegelplatte und deren Handhabung insbesondere bei Siegelplatten mit hohem Gewicht.

In einer weiteren Ausführungsform ist vorgesehen, dass eine Komponente der Siegelstation, die sich im normalen Betrieb der Siegelstation in einem Bewegungsbereich einer Siegelplatte befindet, beweglich und/oder von der Siegelstation entfernbar ausgebildet ist, sodass die Komponente vor einer Entnahme oder einer Einführung einer Siegelplatte entfernt werden kann. Mit dieser Ausführungsform wird der Wechsel der Siegelplatte vereinfacht.

Hierbei kann auch vorgesehen sein, dass die Komponente ausgebildet ist, werkzeuglos bewegt und/oder von der Siegelstation entfernt zu werden. Ein werkzeugloses Bewegen oder Entfernen der Komponente von der Siegelstation ist hier so zu verstehen, dass für das Bewegen oder Entfernen der Komponente kein Werkzeug, wie etwa ein Schraubenzieher, notwendig ist. Dazu kann vorgesehen sein, dass die Komponente über durch einen Menschen ohne den Einsatz von Werkzeug lösbare Befestigungselemente, wie beispielsweise Druckelemente oder Klemmelemente, gelöst werden kann.

In einer Ausführungsform ist die Siegelstation zur Verwendung mit einer Tiefziehverpackungsmaschine ausgebildet. Die Siegelstation eignet sich besonders vorteilhaft, um bei Tiefziehverpackungsmaschinen, die eine Verpackung durch Tiefziehen erzeugen und diese mit einer Oberfolie siegeln, zum Einsatz zu kommen, da hier zwei relativ zueinander bewegte Elemente (die Oberfolie und die Verpackungsmulden) zum Einsatz kommen und die erfindungsgemäße Anordnung der austauschbaren Siegelplatte hier ein einfaches Umrüsten gewährleistet.

Ein Sortiment von Siegelplatten umfassend wenigstens zwei Siegelplatten ist offenbart, wobei die Siegelplatten ausgebildet sind, in einer Siegelstation nach einer der vorangegangenen Ausführungsformen verwendet zu werden. Die Siegelplatten können sich insbesondere hinsichtlich der durch das Siegeln gesiegelten Formen in der Folie unterscheiden, wodurch ein Anpassen an unterschiedliche herzustellende Verpackungen ermöglicht wird. Durch das Sortiment zusammen mit der Siegelstation ist ein einfacher Austausch der Siegelplatte möglich.

In einer Ausführungsform ist vorgesehen, dass jede Siegelplatte ein komplementäres Identifikationselement umfasst, das mit einem Identifikationselement eines Rahmens der Aufnahme der Siegelstation interagieren kann, um ein Einführen der Siegelplatte in nur einer vorgegebenen Ausrichtung zu ermöglichen. Das komplementäre Identifikationselement der Siegelplatte und das Identifikationselement des Rahmens können dabei im Sinne eines "Schlüssel-Schloss-Prinzips" ausgestaltet sein, so dass die Siegelplatte nur in genau einer vorgegebenen Ausrichtung in die Siegelstation eingesetzt werden kann. Dies vermeidet Beschädigungen und gewährleistet den korrekten Betrieb der Siegelstation auch nach Austausch der Siegelplatte.

### Kurze Beschreibung der Figuren

- Fig. 1: zeigt eine Ausführungsform einer Siegelstation;
- Fig. 2: zeigt eine Ausführungsform eines Rahmens mit Führung;
- Fig. 3: zeigt eine Siegelstation mit weiteren Komponenten im Bewegungsbereich der Siegelplatte gemäß einer Ausführungsform;
- Fig. 4: zeigt verschiedene Siegelplatten eines Sortiments von Siegelplatten gemäß einer Ausführungsform.

### Ausführliche Beschreibung

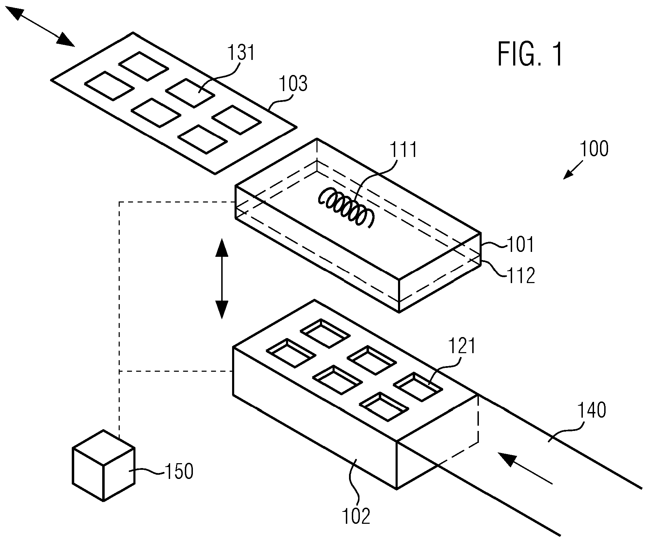

Fig. 1 zeigt eine Ausführungsform einer Siegelstation 100. Die Siegelstation 100 ist zum Siegeln von Verpackungen beispielsweise als Teil einer Tiefziehverpackungsmaschine ausgestaltet. Die Verpackungen können der Siegelstation zugeführt und durch Aufbringen einer weiteren Folie und Erwärmen dieser versiegelt werden. Dieses Konzept ist grundsätzlich bekannt.

Die Siegelstation umfasst hierzu ein Oberwerkzeug 101 sowie ein Unterwerkzeug 102, die relativ zueinander beweglich angeordnet sind. Das Unterwerkzeug 102 kann wenigstens eine Aufnahme 121 umfassen, in die beispielsweise eine vorgeformte und tiefgezogene Verpackung eingebracht werden kann. Diese Ausgestaltung ist besonders bevorzugt bei Verwendung der Siegelstation 100 in Kombination mit einer Tiefziehverpackungsmaschine. Die Erfindung ist jedoch nicht darauf beschränkt, sodass auch andere Ausgestaltungen des Unterwerkzeugs denkbar sind.

Das Oberwerkzeug 101 kann ein Heizelement 111 umfassen, mit dessen Hilfe Wärme erzeugt werden kann, die auf eine auf die Verpackung in der Aufnahme 121 aufgebrachte Oberfolie einwirken kann, um ein Siegeln der Verpackung zu bewirken. Das Heizelement 111 ist hier nur allgemein dargestellt kann jedoch beispielsweise eine oder mehrere Heizstäbe umfassen, die mittels elektrischem Strom Wärme erzeugen. Auch andere Wärmequellen sind hier denkbar und die Erfindung diesbezüglich nicht beschränkt. Bevorzugt kann auch ein Heizelement vorgesehen sein, das Wärme über einen möglichst großen Teil des Bereichs des Oberwerkzeugs, der mit Verpackungsmaterial in Kontakt kommt, abgibt, sodass ein gleichmäßiges Erwärmen bewirkt werden kann.

Dazu kann eine Oberfolie der Siegelstation 100 in der hier dargestellten Ausführungsform als Folienbahn 140 entsprechend der dargestellten Transportrichtung (Pfeil) zugeführt werden.

Oberwerkzeug 101 und Unterwerkzeug 102 sind relativ zueinander bewegbar (beispielsweise mit Hilfe eines Elektromotors 150), so dass zwischen dem Oberwerkzeug und dem Unterwerkzeug die Folie 140 mit den in die Aufnahmen 121 eingebrachten Verpackungen in Anlage gebracht werden kann, um das Siegeln zu bewirken.

Der Siegelstation 100 kann erfindungsgemäß eine Siegelplatte 103 zugeführt werden, die eine Kontur aufweist, die ein Siegeln der Verpackungen in der Siegelstation 100 ermöglicht. Die Kontur kann beispielsweise über entsprechende Ausnahmen 131 in der Siegelplatte 103 bereitgestellt werden, durch die kein Wärmeeintrag auf Verpackungen in der Siegelstation erfolgt. Alternativ oder zusätzlich können in der Siegelplatte 103 auch Erhebungen oder Vertiefungen angeordnet sein, um den Wärmeeintrag an den vorgesehenen Stellen auf die zu siegelnde Verpackung zu bewirken.

Erfindungsgemäß ist vorgesehen, dass die Siegelplatte 103 dem Oberwerkzeug 101 entlang einer Richtung zugeführt werden kann, die entweder parallel oder entgegengesetzt zu der Laufrichtung (Pfeil) der Folie 140 verläuft.

Hiermit wird erreicht, dass ein Wechsel der Siegelplatte 103 durch einen Bediener möglichst einfach durchgeführt werden kann, ohne dass Modifikationen oder Umrüstarbeiten an der Siegelstation 100 vorgenommen werden müssten.

Dazu kann in einer bevorzugten Ausführungsform vorgesehen sein, dass nicht das Oberwerkzeug 101 in Richtung des Unterwerkzeugs 102 bewegt wird, um das Siegeln zu bewirken, sondern dass lediglich das Unterwerkzeug 102 beweglich angeordnet ist und das Oberwerkzeug 101 feststeht. Dies bewirkt eine sichere und zuverlässige Positionierung des Oberwerkzeugs und kann insbesondere Verletzungsrisiken beim Entnehmen der Siegelplatte 103 oder bei ihrem Einlegen reduzieren.

Es kann vorgesehen sein, dass das Oberwerkzeug 101 eine Aufnahme 112, die insbesondere als Rahmen ausgestaltet sein kann oder einen solchen umfassen kann, umfasst, in den die Siegelplatte 103 eingelegt und/oder eingeführt werden kann. Der Rahmen kann dabei, wie in weiteren Ausführungsformen beschrieben, auch beweglich ausgeführt sein, um diesen zusammen mit der Siegelplatte 103 relativ zum Oberwerkzeug 101 zu bewegen und ein Entnehmen bzw. Zuführen der Siegelplatte zu vereinfachen.

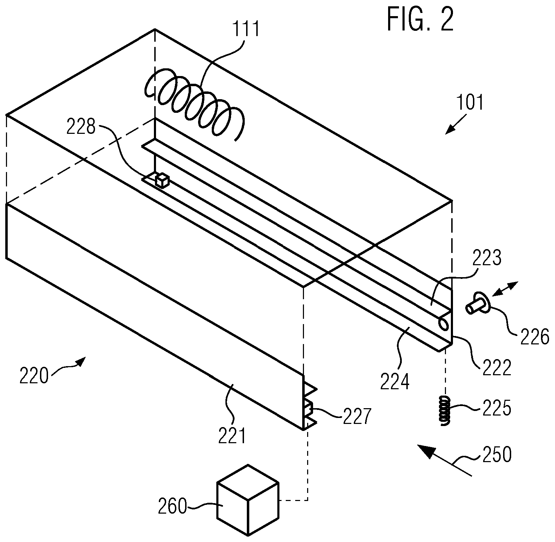

Fig. 2 zeigt eine Ausführungsform einer solchen Aufnahme bzw. eines solchen Rahmens 220, wie er in der Fig. 1 lediglich schematisch dargestellt ist. Die Laufrichtung 250 der Folie ist hier der Übersichtlichkeit halber als Pfeil gezeigt.

In der hier gezeigten Ausführungsform umfasst der Rahmen 220 zwei Führungen 221 und 222. In der hier gezeigten Ausführungsform umfasst jede Führung 221 bzw. 222 eine untere Schiene 224 und eine obere Schiene 223, zwischen denen eine Siegelplatte eingeführt werden kann. Es kann auch vorgesehen sein, dass lediglich eine Schiene, beispielsweise die untere, von dem Heizelement 111 des Oberwerkzeugs wegweisende Schiene, für jede Führung vorgesehen ist, auf der die Siegelplatte in eingeführtem Zustand aufliegen kann.

Alternativ dazu kann auch vorgesehen sein, dass der Rahmen 220 eine an allen vier Seiten des Rahmens begrenzte Aufnahmefläche umfasst, in die eine Siegelplatte eingelegt werden kann. Auch andere Ausführungsformen sind hier denkbar, sofern sie ein Bewegen oder Entnehmen einer Siegelplatte entlang oder entgegen der Laufrichtung 250 ermöglichen.

Die Führungen 221 und 222 können, um ein korrektes Positionieren einer Siegelplatte sicherzustellen, einen Anschlag 227 umfassen, bis zu dem ein Einschieben einer Siegelplatte in den Rahmen 220 möglich ist. In der hier dargestellten Ausführungsform ist der Anschlag 227 nur als Teil der Führung 221 vorgesehen bzw. in dieser, insbesondere zwischen. Es versteht sich, dass dieser Anschlag 227 auch in beiden Führungen 221 und 222 vorgesehen sein kann, um ein Verkanten oder Schrägstellen einer Siegelplatte zu vermeiden.

Ferner muss der Anschlag 227 nicht in der hier dargestellten Richtung entlang der Führungen 221 und/oder 222 angeordnet sein. Der Anschlag 227 ist hier in Richtung des Ursprungs der Folienbahn angeordnet, so dass die Siegelplatte entgegen der Laufrichtung 250 der Folie in den Rahmen 220 eingeführt und parallel zur Laufrichtung aus dem Rahmen 220 entnommen werden kann. Es kann jedoch alternativ auch vorgesehen sein, dass der Anschlag 227 am gegenüberliegenden Ende der Führung oder der Führungen angeordnet ist. In dieser Ausführungsform wird eine Siegelplatte dann in Laufrichtung 250 der Folie in den Rahmen eingeführt und entgegen der Laufrichtung 250 der Folie aus dem Rahmen 220 entnommen.

Weiterhin kann der Rahmen 220 unabhängig von der Ausgestaltung der Führung ein lösbares Befestigungsmittel 226 umfassen, mit dem die Siegelplatte in dem Rahmen befestigt werden kann. Bevorzugt kann dieses Befestigungsmittel 226 als werkzeuglos lösbares Befestigungsmittel ausgestaltet sein. Beispielsweise kann das Befestigungsmittel als Schraube mit Knauf ausgestaltet sein, die von einem Bediener einfach gelöst werden kann. Eine entsprechende Öffnung in dem Rahmen kann ein Einführen des Befestigungsmittels 226 und ein Entnehmen des Befestigungsmittels erlauben.

Weiterhin kann der Rahmen ein Druckelement 225 umfassen, das so ausgestaltet ist, dass es bei Einlegen einer Siegelplatte die Siegelplatte in Richtung des Heizelements 111 des Oberwerkzeugs 101 drückt. Hierdurch wird ein zuverlässiger Wärmeübertrag von dem Heizelement 111 an einer eingelegten Siegelplatte bewirkt. In Figur 2 ist hierzu lediglich schematisch eine Feder gezeigt. Es kann insbesondere vorgesehen sein, dass das Druckelement 225 fest mit dem Rahmen und/oder einem Teil des Oberwerkzeugs 101 verbunden ist und eine untere Schiene 224 einer oder jeder Führung 221 und 222 in Richtung des Heizelements 111 zieht oder drückt.

Der Rahmen 220 für die Siegelplatte kann beweglich relativ zum Oberwerkzeug 101 angeordnet sein. Dazu kann ein Antriebselement 260, wie beispielsweise ein Elektromotor vorgesehen sein. Dieses Antriebselement 260 kann entweder den Rahmen 220 insgesamt (also mit eingelegter Siegelplatte) oder lediglich die in dem Rahmen angeordnete Siegelplatte (beispielsweise entlang der Führungen 221 und 222) bewegen, so dass die Siegelplatte in einen für die Entnahme aus dem Rahmen einfachere Position bewegt werden kann (beispielsweise in Laufrichtung 250 der Folie aus dem Oberwerkzeug 111 heraus).

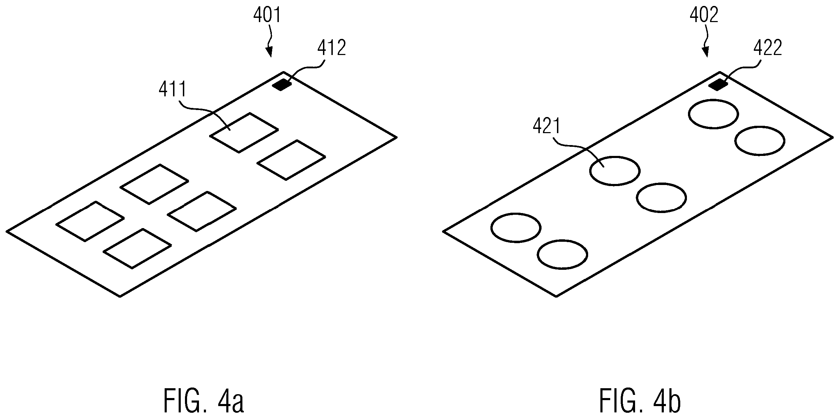

Weiterhin kann die Aufnahme ein Identifikationselement 228 umfassen. Dieses Identifikationselement kann beispielsweise als Materialauswölbung realisiert sein und mit einem korrespondierenden Identifikationselement (siehe hierzu Fig. 4) einer Siegelplatte so zusammenwirken, dass ein Einführen und/oder Entnehmen der Siegelplatte aus dem Rahmen 220 nur in einer bestimmten Ausrichtung der Siegelplatte möglich ist. Hierdurch wird gewährleistet, dass eine Siegelplatte nur in der vorgegebenen Richtung aus dem Rahmen 220 entnommen und/oder entgegen dieser Richtung eingeführt werden kann.

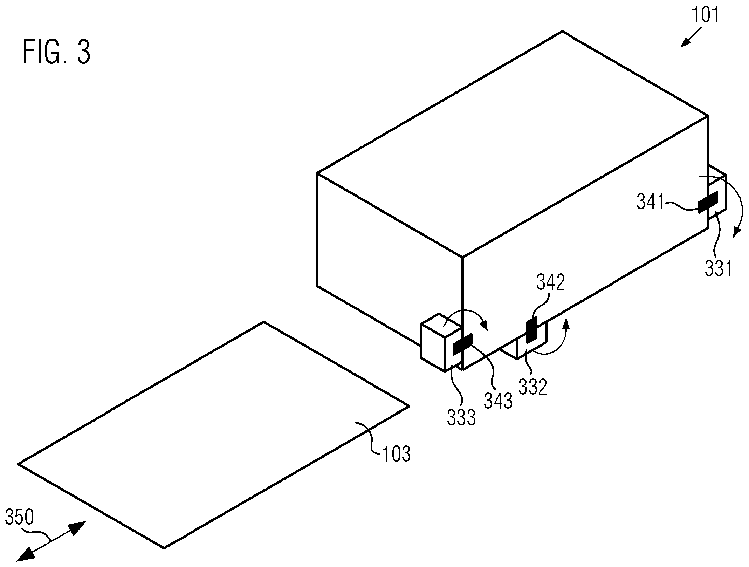

Fig. 3 zeigt eine weitere schematische Ausführungsform eines Oberwerkzeugs 101 einer Siegelstation entsprechend Fig. 1. Diese Ausführungsform ist mit der im Zusammenhang mit den Fig. 1 und 2 beschriebenen Ausführungsformen kombinierbar.

In der hier gezeigten Ausführungsform umfasst das Oberwerkzeug 101 eine Reihe weiterer Komponenten 331 bis 333. Bei den Komponenten kann es sich beispielsweise um Sensoren und/oder Antriebselemente und/oder Steuerelemente, wie Computer, handeln. Diese Ausführungsform ist hinsichtlich der tatsächlichen Ausgestaltung der Komponenten sowie deren Anzahl nicht beschränkt. Diese sind hier so angeordnet, dass sie ein Einführen und/oder Entnehmen einer Siegelplatte 103 entlang oder in Laufrichtung 350 verhindern (indem sie beispielsweise die Einführung in den Rahmen aus der Fig. 2 bzw. in die Führungen verhindern. Die Komponenten 331 bis 333 befinden sich somit in einem Bewegungsbereich der Siegelplatte, wenn diese eingeführt oder entnommen werden soll.

Da die Komponenten 331 - 333 jedoch für den Betrieb der Siegelstation notwendig sein können, ist in dieser Ausführungsform vorgesehen, dass die Komponenten, die sich in dem Bewegungsbereich der Siegelplatte befinden, beweglich gelagert sind und/oder von dem Oberwerkzeug 101 entfernt werden können. Bevorzugt sind dazu geeignete Befestigungselemente 341 bis 343 vorgesehen, die die jeweiligen Komponenten mit dem Oberwerkzeug 101 verbinden. Die Befestigungselemente 341 bis 343 können beispielsweise als Drehelemente ausgestaltet sein, um ein Drehen der Komponenten 331 bis 333 entlang der gezeigten Pfeilrichtungen zu ermöglichen. Alternativ können die Befestigungselemente 341 bis 343 auch als lösbare Verbindungen (beispielsweise Klemmeinrichtungen oder Klickverbinder) ausgestaltet sein, um ein Lösen der Komponenten 331 bis 333 zu ermöglichen. Besonders bevorzugt ist das Bewegen und/oder Entfernen bzw. Lösen der Komponenten mittels der Befestigungselemente werkzeuglos durchführbar, sodass ein Bediener die Komponenten 331 bis 333 jederzeit und ohne Bedarf an Werkzeug Bewegen oder entfernen kann, um den Bewegungsbereich der Siegelplatte freizuhalten und diese zu entnehmen oder einzuführen.

Die Erfindung ist hinsichtlich der Anordnung der Komponenten 331 bis 333 sowie hinsichtlich deren Position relativ zum Oberwerkzeug 101 der Siegelstation nicht beschränkt.

Die Fig. 4a und b zeigen unterschiedliche Ausführungsformen von Siegelplatten 401 und 402 als Teil eines Sortiments von Siegelplatten. Das Sortiment von Siegelplatten kann aus einer Vielzahl von Siegelplatten (beispielsweise 2 oder mehr) bestehen oder diese umfassen. Die Darstellung von lediglich 2 Siegelplatten entsprechend Figuren 4a und 4b ist daher nicht beschränkend zu verstehen. Auch eine beliebige andere Anzahl Siegelplatten kann als Sortiment vorgesehen sein.

In der Fig. 4a umfasst die Siegelplatte Ausnehmungen 411, durch die eine Wärmeleitung auf eine Verpackung nicht möglich ist. Alternativ zu entsprechenden Ausnehmungen kann die Siegelplatte auch Materialauswölbungen oder ähnliche Elemente umfassen, die bei Einsetzen der Siegelplatte im Betrieb der Siegelplatte in Richtung der zu siegelnden Packungen weisen, um einen ausreichenden Wärmeübertrag sicherzustellen. In der hier gezeigten Ausführungsform der Fig. 4a umfassen diese Elemente rechteckige Struktur. Dies ist so nicht zwingend und auch eine andere Struktur kann vorgesehen sein.

Die Siegelplatte 401 umfasst in der hier dargestellten Ausführungsform auch optional ein Identifikationselement 412. Dieses kann korrespondierend zu den bereits in Bezug auf die Fig. 2 beschriebenen Identifikationselement 228 ausgeführt sein, so dass ein Einführen der Siegelplatte 401 nur in einer bestimmten Ausrichtung möglich ist, in der die Identifikationselemente miteinander wechselwirken können.

In der Fig. 4b ist eine weitere Siegelplatte 402 gezeigt, die als Teil des Sortiments von Siegelplatten vorgesehen sein kann.

In dieser Ausführungsform umfasst die Siegelplatte 402 Ausnehmungen 421 oder Materialauswölbungen oder entsprechende Elemente zum Übertragen von Wärme, die kreisförmig ausgebildet sind. Grundsätzlich ist auch diese Ausführung nicht beschränkend und es kann vorgesehen sein, dass sich die Siegelplatten eines Sortiments von Siegelplatten hinsichtlich der Ausnehmungen oder Materialauswölbungen oder entsprechender Elemente zum Erzielen eines auf bestimmte Art geformten Bereichs zum Wärmeübertrag an die Verpackung zum Siegeln der Verpackung hinsichtlich der Form des geformten Bereichs paarweise unterscheiden. Zwei beliebige Siegelplatten eines Sortiments von Siegelplatten können als jeweils unterschiedliche Form des geformten Bereichs aufweisen.

Auch die in Fig. 4b gezeigte Siegelplatte umfasst ein korrespondierendes Identifikationselement 422, das mit einem Identifikationselement des Rahmens der Aufnahme der Siegelstation interagieren kann, um ein Einführen der Siegelplatte in nur einer vorgegebenen Ausrichtung zu ermöglichen.

## Patentansprüche

1. Siegelstation (100) zum Siegeln von Verpackungen, die Siegelstation umfassend ein Oberwerkzeug (101) und ein Unterwerkzeug (102) mit wenigstens einer Aufnahme (121) für eine Verpackung, wobei zum Siegeln eine Folie (140) zwischen dem Oberwerkzeug (101) und dem Unterwerkzeug (102) entlang einer Laufrichtung der Folie (140) geführt werden kann und das Oberwerkzeug (101) und das Unterwerkzeug (102) relativ zueinander bewegbar sind, um ein Siegeln einer Verpackung mit der Folie zu bewirken, wobei das Oberwerkzeug (101) eine Aufnahme (112) zum Aufnehmen einer Siegelplatte (103) aufweist, **dadurch gekennzeichnet , dass** die Aufnahme (112) so ausgebildet ist, dass eine Siegelplatte in Laufrichtung aus der Aufnahme entnommen werden kann.

2. Siegelstation (100) nach Anspruch 1, wobei die Aufnahme (112) wenigstens zwei parallel zur Laufrichtung angeordnete Führungen (221, 222) umfasst, wobei eine Siegelplatte (103) entlang den Führungen (221, 222) in die Aufnahme (112) eingeführt und aus der Aufnahme entnommen werden kann.

3. Siegelstation (100) nach Anspruch 1 oder 2, wobei die Aufnahme (112) lösbare Befestigungsmittel (226) zum Befestigen der Siegelplatte (103) in der Aufnahme umfasst.

4. Siegelstation (100) nach einem der Ansprüche 1 bis 3, wobei das Oberwerkzeug (101) ein Heizelement (111) zum Übertragen von Wärme durch eine Siegelplatte (103) auf die Folie (140) zum Siegeln der Verpackung umfasst.

5. Siegelstation (100) nach Anspruch 4, wobei die Aufnahme (112) ein Druckelement (225) umfasst, das ausgebildet ist, eine in der Aufnahme (112) angeordnete Siegelplatte (103) gegen das Heizelement (111) zu drücken.

6. Siegelstation (100) nach einem der Ansprüche 1 bis 5, wobei die Aufnahme (112) einen beweglich angeordneten Rahmen (220) umfasst, in den eine Siegelplatte (103) eingelegt werden kann, wobei der Rahmen in Laufrichtung bewegbar angeordnet ist, um eine Siegelplatte zu entnehmen.

7. Siegelstation (100) nach Anspruch 6, wobei der Rahmen (220) ein Identifikationselement (228) umfasst, das ein Einführen einer Siegelplatte (103) nur in einer vorgegebenen Ausrichtung ermöglicht.

8. Siegelstation (100) nach einem der Ansprüche 1 bis 7, wobei das Oberwerkzeug (101) feststehend und das Unterwerkzeug (102) bewegbar angeordnet ist, um ein Siegeln einer Verpackung mit der Folie (140) zu ermöglichen.

9. Siegelstation (100) nach einem der Ansprüche 1 bis 8, wobei ein Bewegen einer Siegelplatte (103) zum Entnehmen der Siegelplatte aus der Aufnahme (112) durch ein Antriebselement (260) bewirkt wird.

10. Siegelstation (100) nach einem der Ansprüche 1 bis 9, wobei eine Komponente (331 - 333) der Siegelstation (100), die sich im normalen Betrieb der Siegelstation (100) in einem Bewegungsbereich einer Siegelplatte (103) befindet, beweglich und/oder von der Siegelstation entfernbar ausgebildet ist, sodass die Komponente (331 - 333) vor einer Entnahme oder einer Einführung einer Siegelplatte (103) entfernt werden kann.

11. Siegelstation (100) nach Anspruch 10, wobei die Komponente (331 - 333) ausgebildet ist, werkzeuglos bewegt und/oder von der Siegelstation entfernt zu werden.

## Claims

1. Sealing station (100) for sealing packages, the sealing station comprising an upper tool (101) and a lower tool (102) with at least one receptacle (121) for a package, wherein, for sealing, a film (140) can be guided between the upper tool (101) and the lower tool (102) along a direction of travel of the film (140), and the upper tool (101) and the lower tool (102) are movable relative to each other in order to effect sealing of a package with the film, wherein the upper tool (101) has a receptacle (112) for receiving a sealing plate (103), **characterized in that**
the receptacle (112) is configured to enable removal of a sealing plate from the receptacle in the direction of travel.

2. Sealing station (100) according to claim 1, wherein the receptacle (112) comprises at least two guides (221, 222) arranged parallel to the direction of travel, wherein a sealing plate (103) is insertable into the receptacle (112) and removable from the receptacle along the guides (221, 222).

3. Sealing station (100) according to claims 1 or 2, wherein the receptacle (112) comprises releasable fastening means (226) for fastening the sealing plate (103) in the receptacle.

4. Sealing station (100) according to any one of claims 1 to 3, wherein the upper tool (101) comprises a heating element (111) for transferring heat through a sealing plate (103) to the film (140) for sealing the package.

5. Sealing station (100) according to claim 4, wherein the receptacle (112) comprises a pressure element (225) configured to press a sealing plate (103) arranged in the receptacle (112) against the heating element (111).

6. Sealing station (100) according to any one of claims 1 to 5, wherein the receptacle (112) comprises a movably arranged frame (220) into which a sealing plate (103) can be inserted, wherein the frame is arranged to be movable in the direction of travel in order to remove a sealing plate.

7. Sealing station (100) according to claim 6, wherein the frame (220) comprises an identification element (228) which enables a sealing plate (103) to be inserted in a predetermined orientation only.

8. Sealing station (100) according to any one of claims 1 to 7, wherein the upper tool (101) is fixed and the lower tool (102) is movably arranged to enable sealing of a package with the film (140).

9. Sealing station (100) according to one of claims 1 to 8, wherein movement of a sealing plate (103) to remove the sealing plate from the receptacle (112) is effected by a drive element (260).

10. Sealing station (100) according to any one of claims 1 to 9, wherein a component (331 - 333) of the sealing station (100), which is located within in range of movement of a sealing plate (103) during normal operation of the sealing station (100) is configured to be movable to and/or removable from the sealing station, thereby enabling removal of the component (331-333) prior to removing or inserting a sealing plate (103).

11. Sealing station (100) according to claim 10, wherein the component (331-333) is configured to be moved to and/or removed from the sealing station without tools.

## Revendications

1. Poste de scellage (100) pour sceller des emballages, le poste de scellage comprenant un outil supérieur (101) et un outil inférieur (102) avec au moins un renfoncement (121) pour un emballage, dans lequel un film (140) peut être guidé entre l'outil supérieur (101) et l'outil inférieur (102) le long d'une direction de déplacement du film (140) pour un scellage, et l'outil supérieur (101) et l'outil inférieur (102) sont mobiles l'un par rapport à l'autre pour appliquer un scellage à un emballage avec le film, dans lequel l'outil supérieur (101) comporte un renfoncement (112) pour recevoir une plaque de scellage (103),
**caractérisé en ce que** le renfoncement (112) est réalisé de telle sorte qu'une plaque de scellage peut être retirée du renfoncement dans la direction de déplacement.

2. Poste de scellage (100) selon la revendication 1, dans lequel le renfoncement (112) comprend au moins deux guides (221, 222) agencés parallèlement à la direction de déplacement, dans lequel une plaque de scellage (103) peut être insérée dans le renfoncement (112) et retirée du renfoncement le long des guides (221, 222).

3. Poste de scellage (100) selon la revendication 1 ou 2, dans lequel le renfoncement (112) comprend des moyens de fixation amovibles (226) pour fixer la plaque de scellage (103) dans le renfoncement.

4. Poste de scellage (100) selon l'une des revendications 1 à 3, dans lequel l'outil supérieur (101) comprend un élément chauffant (111) pour transférer la chaleur au film (140) à travers une plaque de scellage (103) pour sceller l'emballage.

5. Poste de scellage (100) selon la revendication 4, dans lequel le renfoncement (112) comprend un élément de poussée (225) qui est conçu pour pousser une plaque de scellage (103) agencée dans le renfoncement (112) contre l'élément chauffant (111).

6. Poste de scellage (100) selon l'une des revendications 1 à 5, dans lequel le renfoncement (112) comprend un cadre (220) agencé de manière mobile dans lequel une plaque de scellage (103) peut être insérée, dans lequel le cadre est agencé de manière mobile dans la direction de déplacement afin de retirer une plaque de scellage.

7. Poste de scellage (100) selon la revendication 6, dans lequel le cadre (220) comprend un élément d'identification (228) qui permet l'insertion d'une plaque de scellage (103) uniquement dans une orientation prédéterminée.

8. Poste de scellage (100) selon l'une des revendications 1 à 7, dans lequel l'outil supérieur (101) est agencé de manière fixe et l'outil inférieur (102) est agencé de manière mobile afin de permettre le scellage d'un emballage avec le film (140).

9. Poste de scellage (100) selon l'une des revendications 1 à 8, dans lequel le déplacement d'une plaque de scellage (103) pour retirer la plaque de scellage du renfoncement (112) est effectué par un élément d'entraînement (260).

10. Poste de scellage (100) selon l'une des revendications 1 à 9, dans lequel un composant (331 - 333) du poste de scellage (100), qui se trouve dans une zone de déplacement d'une plaque de scellage (103) pendant le fonctionnement normal du poste de scellage (100), est conçu pour être mobile et/ou amovible du poste de scellage, de sorte que le composant (331 - 333) peut être retiré avant qu'une plaque de scellage (103) ne soit retirée ou insérée.

11. Poste de scellage (100) selon la revendication 10, dans lequel le composant (331 - 333) est conçu pour être déplacé et/ou retiré du poste de scellage sans outils.
